# EUROPEAN PATENT SPECIFICATION

(11) **EP 1 510 298 B1**
(45) Date of publication and mention of the grant of the patent: **15.12.2010**
(21) Application number: 04020454.7
(22) Date of filing: 27.08.2004
(51) Int. Cl.: B25D 17/04

(54) **Power tool**
Kraftwerkzeug
Outil électrique

(30) Priority: 01.09.2003 JP 2003308573
(43) Date of publication of application: 02.03.2005
(73) Proprietor: Makita Corporation, Anjo-shi, Aichi-ken 446-8502 (JP)
(72) Inventor: Oki, Sadaharu, Anjo-shi, Aichi 446-8502 (JP)
(74) Representative: Kramer - Barske - Schmidtchen

(56) References cited:
- DE-A- 10 036 078
- DE-B- 1 260 399
- DE-U- 1 672 058
- GB-A- 2 137 132
- US-A- 2 425 245
- US-A- 4 282 938
- US-A- 5 927 407
- US-A1- 2003 132 016

## Description

### BACGROUND OF THE INVENTION

### Field of the Invention

The present invention relates to a technique of reducing vibration in a handle of a reciprocating power tool which drives a tool bit at a predetermined cycle, such as an electric hammer and a hammer drill.

### Description of the Related Art

Japanese non-examined utility model publication No. 1-18306 discloses an electric hammer having a vibration isolating handle. According to this prior art reference, a handle (hand grip) is connected to a hammer body (impact originating part) via an elastic element (spring).

DE 100 36 078 A1 and DE 16 720 58 U disclose further examples of power tools with handles connected to the housing via one or more elastic elements.

US 4 282 938 A discloses a vibration insulation device for a vibratory machine.

US 5 927 407 A discloses an isolator for use in a hand-held vibrating device.

GB 2 137 132 A discloses another example of a power tool with a handle connected to a housing via an elastic element.

In particular DE 100 36 078 A1 and GB 2 137 132 A both disclose examples of a power tool according to the preamble of claim 1.

With this construction, the elastic element can alleviate vibration caused in the hammer body and inputted to the handle. In the construction in which the handle is connected via the elastic element, the elastic element is required to have a smaller spring constant in order to improve vibration absorbing effectiveness. However, if the spring constant is smaller, the hammer body and the handle may swing with respect to each other. Therefore, the spring constant is practically made large enough to avoid such swinging. In this case, however, the vibration absorbing effectiveness decreases.

### SUMMARY OF THE INVENTION

Accordingly, it is an object of the present invention to provide an effective vibration reducing technique in improving vibration absorbing effectiveness of a handle in a reciprocating power tool.

This object is achieved by a power tool according to claim 1. According to the invention, representative reciprocating power tool includes a power tool body, a handle, an elastic element and a dynamic vibration reducer. The handle is connected to the power tool body via the elastic element. The dynamic vibration reducer is provided in or on the outside of the handle. With such construction, while the elastic element absorbs vibration transmitted from the power tool body to the handle, the dynamic vibration reducer absorbs the vibration which the elastic member can not absorb.

Other objects, features and advantages of the present invention will be readily understood after reading the following detailed description together with the accompanying drawings and the claims.

### BRIEF DESCRIPTION OF THE DRAWINGS

FIG. 1 is a front view showing an entire electric hammer according to a representative embodiment of the invention.
FIG. 2 is a partial section showing the essential section of the representative embodiment.

### DETAILED DESCRIPTION OF THE INVENTION

A representative reciprocating power tool includes a power tool body and a handle which is connected to the power tool body via an elastic element. The "reciprocating power tool" of the present invention may include an impact power tool such as an electric hammer and a hammer drill, which performs a crushing operation or a drilling operation on a workpiece by the axial striking movement or by the axial striking movement and rotation of a tool bit. The power tool may also include a cutting power tool such as a reciprocating saw and a jigsaw, which performs a cutting operation on a workpiece by reciprocating a blade. The "elastic element" may include a spring or rubber. Further, the manner of "connecting the handle to the power tool body via an elastic element" may include a manner of connecting the handle at the both ends to the power tool body (double end supporting) and a manner of connecting the handle at one end to the power tool body (cantilever supporting). Further, in the case of double end supporting, either one or both of the ends may be supported by the elastic element. Basically, when vibration is caused in the power tool body during the operation, transmission of the vibration from the power tool body to the handle can be reduced by the vibration absorbing function of the elastic element.

Further, according to the invention, the handle is provided with a dynamic vibration reducer. The dynamic vibration reducer may be suitably disposed within the handle or on the outside surface of the handle. Thus, in addition to the elastic element, the dynamic vibration reducer further reduces the vibration which could not be completely absorbed by the elastic element. As a result, vibration reduction with respect to the handle can be ensured.

The combinations of features and steps disclosed within the following detailed description may not be necessary to practice the invention in the broadest sense, and are instead taught merely to particularly describe some representative examples of the invention, which detailed description will now be given with reference to the accompanying drawings.

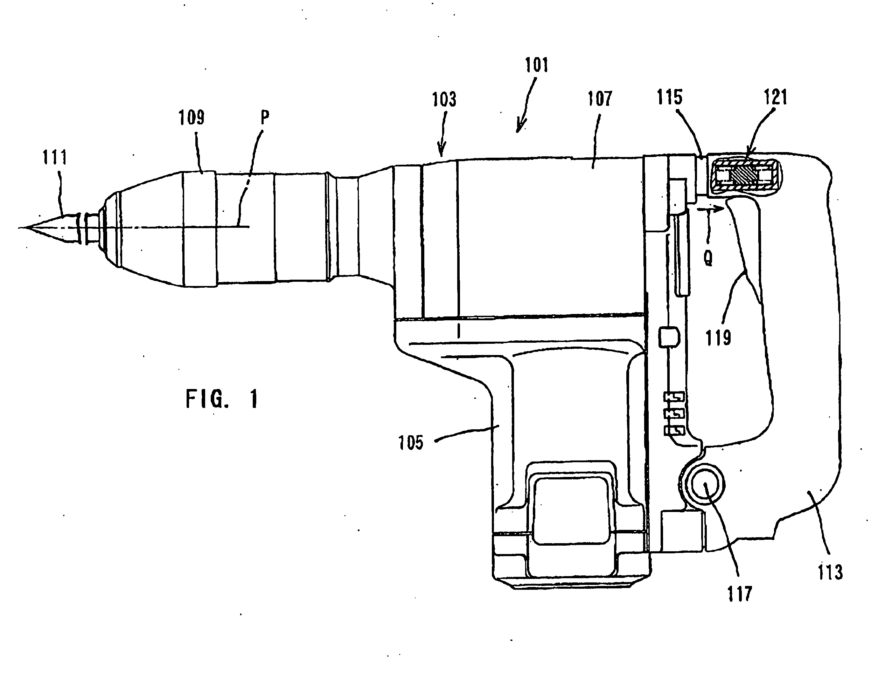

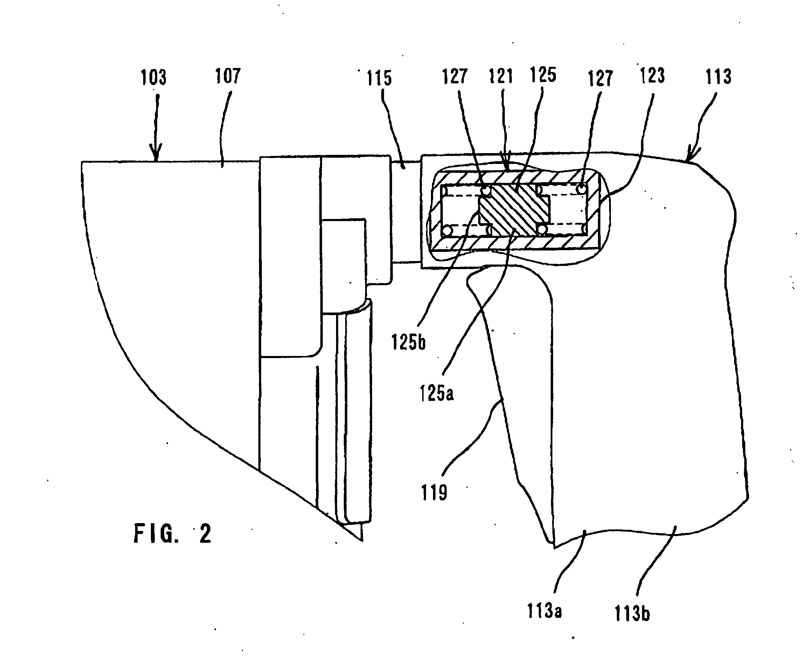

A representative embodiment of the invention will now be described with reference to the drawings. An electric hammer will be explained as a representative example of the power tool according to the embodiment of the present invention. FIG. 1 shows the entire electric hammer and FIG. 2 shows an essential part thereof. As shown in FIG. 1, a representative electric hammer 101 according to the embodiment mainly includes a body 103 that defines the contours of the electric hammer 101. The body 103 includes a motor housing 105, a gear housing 107 and a tool holder 109 which occupies the tip end (front end) region of the gear housing 107. The body 103 is a feature that corresponds to the "power tool body" according to the invention. A handle (handgrip) 113 is mounted on the rear end of the motor housing 105 and the gear housing 107.

Although it is not particularly shown, an impact driving mechanism is disposed within the body 103 and serves to transmit a striking movement to a hammer bit 111 which is retained by the tool holder 109. The hammer bit 111 is a feature that corresponds to the "tool bit" according to the invention.

Because the construction of the impact driving mechanism for the hammer bit 111 as itself is a well known art, it will be only briefly explained. A driving motor as a driving source is disposed within the motor housing 105. The rotating output of the driving motor is converted into reciprocating movement of a piston via a crank mechanism which is disposed within the gear housing 107. When the piston linearly moves, a striker linearly moves forward at high speed by the action of a so-called air spring and collides with an impact bolt as an intermediate element. The impact bolt, in turn, linearly moves forward at high speed and collides with the hammer bit 111. Then, the hammer bit 111 linearly moves forward at high speed. Thus, the hammer bit 111 performs a hammering (striking) movement and as a result, hammering operation is performed to a workpiece (not particularly shown).

The striker and the impact bolt form a striking mechanism that transmits a striking movement to the hammer bit 111. The striking mechanism and the hammer bit 111 move linearly generally along the same line. When the hammer bit 111 is driven, vibration is caused within the body 103 by the striking movement of the hammer bit 111.

In order to reduce transmission of the vibration which has been caused in the body 103 to the handle 113, the handle 113 is connected to the body 103 in the following manner. Specifically, one end (upper end) of the handle 113 is connected to the rear end of the gear housing 107 via an elastic element 115 for absorbing vibration. For example, a spring or rubber is used for the elastic element 115. The connection by the elastic element 115 is located rearward of the hammer bit 111 near a travel path P of the center of gravity of the reciprocating hammer bit 111. The elastic element 115 applies a biasing force at least in the input direction of vibration or in the longitudinal direction of the hammer bit 111. Further, the elastic element 115 may be configured to apply a biasing force in the other directions as well.

Further, the other end (lower end) of the handle 113 is connected to the rear end of the motor housing 105 via a pivot 117 such that the handle 113 can rotate around the pivot 117. As a result of such rotation, the upper end region of the handle 113 moves substantially in the same direction as the input direction Q of vibration inputted into the handle 113 (equal to the longitudinal direction of the hammer bit 111). Thus, the vibration absorbing function of the elastic element 115 is performed with respect to the vibration in the longitudinal direction of the hammer bit 111.

Further, a dynamic vibration reducer 121 for reducing vibration is provided within the handle 113 rearward of the elastic element 115. Specifically, the dynamic vibration reducer 121 is detachably disposed within the hollow portion of the handle 113 at the upper end region of the handle 113 so as not to hinder the outer shape of the handle 113.

The dynamic vibration reducer 121 is arranged so as to reduce vibration in the longitudinal direction of the hammer bit 111 which is inputted into the handle 113. FIG. 2 shows a detailed view of the dynamic vibration reducer 121. As shown in FIG. 1 and FIG. 2, the dynamic vibration reducer 121 is disposed in a position remote form the pivot 117 and mainly includes an elongated hollow cylindrical body 123 which extends laterally along the longitudinal direction of the hammer bit 111. The cylindrical body 123 is a feature that corresponds to the "housing body" according to the invention. Further, a weight 125 is disposed within the cylindrical body 123 and extends in the longitudinal direction of the cylindrical body 123. The weight 125 includes a large-diameter portion 125a and a small-diameter portion 125b. A biasing spring 127 is disposed on the right and left sides of the large-diameter portion 125a of the weight 125. The biasing spring 127 is a feature that corresponds to the "elastic member" according to the invention. The biasing spring 127 applies a biasing force to the weight 125 between the weight 125 and the cylindrical body 123 when the weight 125 moves in the longitudinal direction of the cylindrical body 123.

The dynamic vibration reducer 121 is removably attached to a handle structure 113a by appropriate fastening devices such as a screw or a clip. Specifically, the handle 113 incorporates the dynamic vibration reducer 141 in one piece. The cylindrical body 123 of the dynamic vibration reducer 121 may be directly formed on the handle structure. Further, a trigger 119 for operating a power switch of the driving motor is provided as shown on the handle 113.

Now, operation and use of the representative electric hammer 101 will now be explained. When the trigger 119 is depressed to turn on the power switch and the driving motor is driven, the rotating output of the driving motor is converted into linear motion via the crank mechanism, as mentioned above. Further, the linear motion is transmitted to the hammer bit 111 as striking movement via the striking mechanism which comprises the striker and the impact bolt. Thus, the hammering operation is performed on the workpiece by the hammer bit 111.

When the hammer bit is driven, impulsive and cyclic vibration is caused in the body 103. The input of this vibration from the body 103 into the handle 113 is reduced by the vibration absorbing function of the elastic element 115. However, when the elastic element 115 can not completely absorb the inputted vibration, the dynamic vibration reducer 121 serves to reduce the vibration. Specifically, the weight 125 and the biasing springs 127 perform a dynamic vibration reduction in cooperation with respect to the handle 113 on which a certain external force (vibration) is exerted. Thus, the vibration of the handle 113 of the present embodiment can be effectively reduced. The principle of the vibration reduction by the dynamic vibration reducer 121 is well known and therefore will not be described in further detail.

According to the representative embodiment, the elastic element 115 is adapted to absorb vibration of the handle 113. Further, the dynamic vibration reducer 121 is adapted to reduce vibration which has not been absorbed by the elastic element 115. Thus, the effectiveness of reducing vibration of the handle 113 can be enhanced.

Further, because the dynamic vibration reducer 121 can be removed from the handle 113, the dynamic vibration reducer 121 may be removed when vibration reduction by the dynamic vibration reducer 121 is not required depending on the operating conditions. By removing the dynamic vibration reducer, total weight of the electric hammer 101 can be reduced.

As to the dynamic vibration reducer 121, the large-diameter portion 125a and the small-diameter portion 125b form the weight 125 so that the outer dimensions of the weight 125 can be appropriately controlled and the entire weight 125 can be made compact in size. Further, the weight 125 is elongated in the moving direction so that the weight 125 can move with stability in the longitudinal direction of the cylindrical body 123.

The dynamic vibration reducer 121 forms a vibration reducing mechanism by using the weight 125 and the biasing springs 127. However, for example, oil may be charged into the region on the both sides of the large-diameter portion 125a of the weight 125 within the cylindrical body 123. With this construction, not only the elastic force of the elastic element but a damping force can be applied to the weight 125 when the weight 125 moves within the cylindrical body 123.
Further, a plurality of dynamic vibration reducers 121 having the weights 125 of varying mass or having the biasing springs 127 of varying spring constant may be provided in the handle 113. With this construction, vibration of varying frequencies can be effectively reduced.

Further, while the dynamic vibration reducer 121 is disposed within the handle 113, it may be removably mounted on the outside of the handle 113, for example, on the upper end, the side surface or the rear end of the handle 113 by appropriate fastening devices such like a screw or a clip. The dynamic vibration reducer 141 may be mounted to the grip part 125 by engagement between a slide groove and a projection or by using a hook-and-loop fastener, instead of using a screw or a clip. Further, the dynamic vibration reducer 141 may be mounted to the handle 113 such that it is entirely contained within the handle 113 or completely projects to the outside of the handle 113. Otherwise, the dynamic vibration reducer may be partly contained within the handle 113.

Further, while the embodiment has been described as being applied to the electric hammer 101 as an example of the reciprocating power tool, it may be applied to a hammer drill which performs a hammer drilling operation on a workpiece by the axial striking movement and the rotation of a tool bit in the form of a drill bit. Other than impact power tools such like an electric hammer and a hammer drill, it may also be applied to a cutting power tool such like a reciprocating saw and a jigsaw, which performs a cutting operation on a workpiece by reciprocating a tool bit in the form of a cutting blade.

### Description of Numerals

- 101: electric hammer (reciprocating power tool)
- 103: body (power tool body)
- 105: motor housing
- 107: gear housing
- 109: tool holder
- 111: hammer bit (tool bit)
- 113: handle
- 121: dynamic vibration reducer
- 123: cylindrical body (housing body)
- 125: weight
- 127: biasing spring (elastic member)

## Claims

1. A power tool adapted for reciprocating a tool bit, comprising a power tool body (103), a handle (113), and an elastic element (115), wherein the handle (113) is connected to the power tool body (103) at one end via the elastic element (115) adapted to reduce vibration transmission from the power tool body (103) to the handle (113) and at the other end via a pivot (117) such that the handle can pivot with respect to the power tool body, wherein only the other end of the handle is connected to the power tool body via a pivot, **characterized in that** the handle (113) is provided with a dynamic vibration reducer (121) disposed in a position remote from the pivot (117).

2. The power tool as defined in claim 1, wherein the handle includes upper and lower ends, the lower end of the handle is relatively rotatably coupled to the power tool body, the upper end of the handle is coupled to the power tool body via the elastic element (115), the dynamic vibration reducer (121) is disposed in the upper end of the handle.

3. The power tool as defined in claim 2, wherein the upper end of the handle (113) has a lateral end region connected to the power tool body and the dynamic vibration reducer (121) is disposed in the lateral end region.

4. The power tool as defined in any one of claims 1 to 3, wherein the handle (113) has a hollow portion and the dynamic vibration reducer (121) is disposed within the hollow portion of the handle.

5. The power tool as defined in one of claims 1 to 4, wherein the dynamic vibration reducer includes a housing body (123), a weight (125) disposed within the housing body and an elastic member (127) that connects the weight (125) and the housing body (123).

6. The power tool as defined in claim 5 further adapted to hold a tool bit (111) to perform a predetermined processing work to a workpiece by linearly moving at least in a longitudinal direction of the power tool body (103),
wherein a path of the center of gravity of the weight (125) is substantially in the vicinity of a path of the center of gravity of the tool bit (111).

7. The power tool as defined in one of claims 1 to 6, wherein the power tool is adapted to provide hammering or hammer drilling operation to a workpiece.

8. The power tool of any of claims 1 to 7, wherein the dynamic vibration reducer is removably attached to the handle (113).

## Patentansprüche

1. Elektrowerkzeug, das angepasst ist zum Hin- und Herbewegen einer Werkzeugspitze, mit einem Elektrowerkzeugkörper (103), einem Griff (113) und einem elastischen Element (115), bei dem der Griff (113) an einem Ende über das elastische Element (115), das dazu angepasst ist, eine Schwingungsübertragung von dem Elektrowerkzeugkörper (103) auf den Griff (103) zu verringern, und an dem anderen Ende über ein Drehgelenk (117) mit dem Elektrowerkzeugkörper (103) verbunden ist, derart, dass sich der Griff bezüglich des Elektrowerkzeugkörpers drehen kann, wobei lediglich das andere Ende des Griffs über ein Drehgelenk mit dem Elektrowerkzeugkörper verbunden ist,
**dadurch gekennzeichnet, dass** der Griff (113) mit einem dynamischen Schwingungsdämpfer (121) versehen ist, der sich an einer Position entfernt von dem Drehgelenk (117) befindet.

2. Elektrowerkzeug nach Anspruch 1, bei dem der Griff ein oberes und ein unteres Ende aufweist, das untere Ende des Griffs relativ drehbar mit dem Elektrowerkzeugkörper verbunden ist, das obere Ende des Griffs über das elastische Element (115) mit dem Elektrowerkzeugkörper verbunden ist, der dynamische Schwingungsdämpfer (121) in dem oberen Ende des Griffs angeordnet ist.

3. Elektrowerkzeug nach Anspruch 2, bei dem das obere Ende des Griffs (113) einen lateralen Endbereich aufweist, der mit dem Elektrowerkzeugkörper verbunden ist, und der dynamische Schwingungsdämpfer (121) in dem lateralen Endbereich angeordnet ist.

4. Elektrowerkzeug nach einem der Ansprüche 1 bis 3, bei dem der Griff (113) einen hohlen Teil aufweist und der dynamische Schwingungsdämpfer (121) innerhalb des hohlen Teils des Griffs angeordnet ist.

5. Elektrowerkzeug nach einem der Ansprüche 1 bis 4, bei dem der dynamische Schwingungsdämpfer einen Gehäusekörper (123), ein Gewicht (125), das innerhalb des Gehäusekörpers angeordnet ist, und ein elastisches Bauteil (127) aufweist, das das Gewicht (125) mit dem Gehäusekörper (123) verbindet.

6. Elektrowerkzeug nach Anspruch 5, das ferner dazu angepasst ist, eine Werkzeugspitze (111) zum Durchführen einer vorbestimmten Bearbeitung eines Werkstücks durch lineares Bewegen mindestens in einer Längsrichtung des Elektrowerkzeugkörpers (103) aufzunehmen, bei dem ein Weg des Schwerpunkts des Gewichts (125) im Wesentlichen in der Nähe eines Wegs des Schwerpunkts der Werkzeugspitze (111) liegt.

7. Elektrowerkzeug nach einem der Ansprüche 1 bis 6, bei dem das Elektrowerkzeug dazu angepasst ist, ein Werkstück durch Schlagen oder Schlagbohren zu bearbeiten.

8. Elektrowerkzeug nach einem der Ansprüche 1 bis 7, bei dem der dynamische Schwingungsdämpfer abnehmbar an dem Griff (113) angebracht ist.

## Revendications

1. Outil électrique adapté pour appliquer à une mèche d'outil un mouvement alternatif, comprenant un corps d'outil électrique (103), une poignée (113) et un élément élastique (115), dans lequel la poignée (113) est raccordée au corps d'outil électrique (103), à une extrémité, via l'élément élastique (115) adapté pour réduire la transmission de vibrations du corps d'outil électrique (103) à la poignée (113) et, à l'autre extrémité, via un pivot (117) tel que la poignée puisse pivoter par rapport au corps d'outil électrique, dans lequel seule l'autre extrémité de la poignée est raccordée au corps d'outil électrique via un pivot,
**caractérisé en ce que** la poignée (113) est munie d'un réducteur de vibrations dynamique (121) disposé dans une position distante du pivot (117).

2. Outil électrique selon la revendication 1, dans lequel la poignée comprend des extrémités supérieure et inférieure, l'extrémité inférieure de la poignée est couplée au corps d'outil électrique avec une rotation relative, l'extrémité supérieure de la poignée est couplée au corps d'outil électrique via l'élément élastique (115), le réducteur de vibrations dynamique (121) est disposé dans l'extrémité supérieure de la poignée.

3. Outil électrique selon la revendication 2, dans lequel l'extrémité supérieure de la poignée (113) a une région d'extrémité latérale raccordée au corps d'outil électrique et le réducteur de vibrations dynamique (121) est disposé dans la région d'extrémité latérale.

4. Outil électrique selon l'une quelconque des revendications 1 à 3, dans lequel la poignée (113) a une partie creuse et le réducteur de vibrations dynamique (121) est disposé à l'intérieur de la partie creuse de la poignée.

5. Outil électrique selon l'une quelconque des revendications 1 à 4, dans lequel le réducteur de vibrations dynamique comprend un corps de boîtier (123), un poids (125) disposé dans le corps de boîtier et un élément élastique (127) qui raccorde le poids (125) et le corps de boîtier (123).

6. Outil électrique selon la revendication 5 adapté en outre pour maintenir une mèche d'outil (111) afin d'effectuer un travail de traitement prédéterminé sur une pièce par déplacement de manière linéaire au moins dans une direction longitudinale du corps d'outil électrique (103),
dans lequel un trajet du centre de gravité du poids (125) est sensiblement à proximité d'un trajet du centre de gravité de la mèche d'outil (111).

7. Outil électrique selon l'une quelconque des revendications 1 à 6, dans lequel l'outil électrique est adapté pour faire subir une opération de percussion ou de perforation à percussion à une pièce.

8. Outil électrique selon l'une des revendications 1 à 7, dans lequel le réducteur de vibrations dynamique est fixé de manière amovible à la poignée (113).
